# EUROPEAN PATENT APPLICATION

(11) **EP 3 982 162 A1**
(43) Date of publication of application: **13.04.2022**
(21) Application number: 20382894.2
(22) Date of filing: 09.10.2020
(51) Int. Cl.: G01S 17/42, G01S 7/481, G01S 17/89, G01S 17/87

(54) **LIDAR DEVICE**

(71) Applicant: NABLA VISION SL, 08850 Barcelona (ES)
(72) Inventor: GARCIA FAVROT, Cristina Florentina, 08850 Barcelona (ES); ROMERO MORA, Jordi, 08850 Barcelona (ES)
(74) Representative: Hoffmann Eitle

(57) **Abstract**

A lidar device (100), comprising: a rotary lidar source (110) comprising one or more laser emitters, the rotary lidar source configured to emit radiation from each laser emitter at a respective elevation angle and at a plurality of azimuthal angles about a first axis, the rotary lidar source further comprising one or more detectors configured to detect radiation reflected from the surroundings which is emitted from the one or more laser emitters; and a reflector (120) at least partially surrounding the rotary lidar source, the reflector configured to reflect radiation emitted from the rotary lidar source at a plurality of azimuthal angles for one or more elevation angles to generate a transformed field of view having point distribution with an increased point density in at least a part of the transformed field of view.

## Description

### Field

The present disclosure relates to a lidar device comprising a rotary lidar source, and methods of analysing lidar data from the lidar device. The present disclosure also relates to a method for integrating lidar data with stereovision data.

### Background

Lidar is a method for measuring distances by illuminating a target with laser light and measuring the return time of the reflected light. Commonly-used types of lidar technology include rotary or spinning lidar, scanning lidar, solid state lidar or flash lidar.

Scanning lidar uses a rotating mirror to steer a single laser light beam emitted by a (fixed) laser emitter to scan the surroundings. Solid state lidar is based on microelectromechanical mirrored elements (MEMs) or optical phased arrays (OPAs) to steer a cohesive signal in a specific direction. Flash lidar utilises a widened laser pulse illuminating the whole scene.

Rotary or spinning lidar comprises one or more laser emitters oriented at different respective elevation angles. The rotary lidar is configured to rotate about an axis such that the laser emitters emit radiation at a plurality of azimuthal angles as the rotary lidar rotates. The rotary lidar comprises one or more detectors to detect the reflected radiation and the time taken for the reflected radiation to return is recorded. From the azimuthal and elevation angle of the emitted/reflect radiation, and the time of flight data, a point cloud of xyz co-ordinates are generated which describes the rotary lidar's surroundings.

The generated point cloud from a rotary lidar provides a 360° field of view. However, each laser emitter only provides data for a single elevation angle, and no information is provided for the surroundings between elevation angles. Accordingly, to increase the resolution of the point cloud in the elevation direction, the number of lasers in the rotary lidar must be increased, which increases the complexity and the cost of the rotary lidar. Alternatively, the rotary lidar may be placed on a moving platform, such as a vehicle or a pan and tilt system, and datapoints of different frames are integrated to provide a denser point cloud. However, such a technique works well only for non-moving objects and is not as effective for real-time, dynamic detection of objects.

Further, for applications where a 360° degree field of view is not needed, a portion of the data points are not useful.

Accordingly, there is a desire to improve rotary lidars for real-time, dynamic imaging, whilst minimising the number of laser emitters required. There is also a desire to improve or adapt the distribution of the point cloud generated by rotary lidar depending on the desired application.

The point cloud generated by any of the above lidar systems comprises a set of accurate data points. However, whilst highly accurate, the data points may be sparse such that interpolation between neighbouring data points to compute object boundaries or surfaces is sub-optimal. On the other hand, stereovision data provides a dense but less accurate point cloud. Integration of lidar with stereovision may therefore provide improved object detection and characterization. Nonetheless, stereo algorithms may be computationally intense which inhibits real-time integration of lidar and stereovision data.

Accordingly, there is a desire to improve integration of lidar data with stereovision data.

### Summary

According to a first aspect of the invention, there is provided a lidar device, comprising: a rotary lidar source comprising one or more laser emitters, the rotary lidar source configured to emit radiation from each laser emitter at a respective elevation angle and at a plurality of azimuthal angles about a first axis, the rotary lidar source further comprising one or more detectors configured to detect radiation reflected from the surroundings which is emitted from the one or more laser emitters; and a reflector at least partially surrounding the rotary lidar source, the reflector configured to reflect radiation emitted from the rotary lidar source at a plurality of azimuthal angles for one or more elevation angles to generate a transformed field of view having point distribution with an increased point density in at least a part of the transformed field of view..

According to a second aspect of the invention, there is provided a computer-implemented method of computing co-ordinates of datapoints from a lidar device, the lidar device comprising a rotary lidar source configured to emit radiation at one or more elevation angles, the rotary lidar source configured to emit radiation at a plurality of azimuthal angles at each elevation angle, and a reflector at least partially surrounding the rotary lidar source for generating a transformed field of view, the method comprising: receiving a plurality of datapoints from the rotary lidar source, each datapoint comprising at least an azimuthal angle and elevation angle of the radiation, and an indication of the total distance travelled by the radiation to an object; for each received datapoint: calculating a unit vector of the radiation emitted from the lidar device at the azimuthal angle and elevation angle; calculating the coordinates of the datapoint from the unit vector and the indication of the total distance travelled by the radiation.

According to a third aspect of the invention there is provided a computer-implemented method, comprising: receiving a pair of image data from a pair of imaging devices of a stereo camera; receiving lidar data from a lidar device, the data comprising a plurality of datapoints each having physical co-ordinates, the datapoints having a gridded distribution in the field of view of the lidar device partitioning the field of view into a plurality of grid cells; receiving the position and orientation of the lidar device relative to each imaging device; mapping the grid cells of the lidar data onto the pair of image data from the position and orientation of the lidar device relative to each imaging device; and performing a stereo algorithm on the pair of image data for one or more grid cells.

According to a fourth aspect of the invention, there is provided a computer program product comprising instructions which, when executed by a computer, cause the computer to carry out the method of the second aspect.

According to a fifth aspect of the invention, there is provided a kit of parts, comprising: a rotary lidar source comprising a plurality of laser emitters, each laser emitter configured to emit radiation from the rotary lidar source at a respective elevation angle, the plurality of laser emitters configured to emit radiation from the rotary lidar source at a plurality of azimuthal angles about a first axis and at the respective elevation angle, the rotary lidar source further comprising one or more detectors configured to detect radiation reflected from the surroundings which is emitted from the laser emitters; and a reflector configured to at least partially surround the rotary lidar source, the reflector configured to reflect radiation emitted from the rotary lidar device at a plurality of azimuthal angles for a plurality of elevation angles to generate a transformed field of view having point distribution with an increased point density in at least a part of the transformed field of view.

### Brief description of the drawings

To enable better understanding of the present disclosure, and to show how the same may be carried into effect, reference will now be made, by way of example only, to the accompanying schematic drawings, in which:
Fig. 1 shows an exemplary rotary lidar device;
Fig. 2 illustrates an exemplary rendering of the surroundings of the lidar device of Fig. 1;
Figs. 3A, 3B and 3C show side, top, and perspective views of a lidar device according to one or more embodiments of the invention shown and described herein;
Fig. 4 shows a point distribution of the emitted radiation when projected onto a plane perpendicular to the z axis of the rotary lidar source of Figs. 3A to 3C;
Fig. 5 illustrates a perspective view of a field of view a lidar device without a reflector present, as compared to the field of view with a reflector present, according to one or more embodiments of the invention shown and described herein;
Figs. 6A and 6B show side and top views of a lidar device according to one or more embodiments of the invention shown and described herein;
Fig. 6C shows a side view of the lidar device of Figs. 6A and 6B in a different configuration;
Fig. 6D shows the resulting point distribution of the emitted radiation of the device in the configuration of Fig. 6A;
Fig. 6E shows the resulting point distribution of the emitted radiation of the device in the configuration of Fig. 6C;
Fig. 7 shows a side view of a lidar device according to one or more embodiments of the invention shown and described herein;
Fig. 8 shows a side view of a lidar device according to one or more embodiments of the invention shown and described herein;
Fig. 9 illustrates a perspective view of a field of view a lidar device without a reflector present, as compared to the field of view with a reflector present, according to one or more embodiments of the invention shown and described herein;
Figs. 10A and 10B show respective side and top views of a lidar device according to one or more embodiments of the invention shown and described herein;
Figs. 11A and 11B show respective side and top views of a lidar device according to one or more embodiments of the invention shown and described herein;
Fig. 11C shows a point distribution of the emitted radiation when projected onto a plane perpendicular to the z axis of the rotary lidar source of Figs. 11A and 11B;
Figs. 12A and 12B show respective side and top views of a lidar device according to one or more embodiments of the invention shown and described herein;
Fig. 13 shows a point distribution of the emitted radiation when projected onto a plane perpendicular to the z axis of the rotary lidar source of Figs. 12A and 12B;
Figs. 14A and 14B show respective side and top views of a lidar device according to one or more embodiments of the invention shown and described herein;
Fig. 15 shows a point distribution of the emitted radiation when projected onto a plane perpendicular to the z axis of the rotary lidar source of Figs. 15A and 15B;
Figs. 16A shows a side view of a lidar device according to one or more embodiments of the invention shown and described herein;
Fig. 16B shows a ray tracing diagram for an optical configuration of a lidar device according to one or more embodiments show and described herein;
Figs. 17 shows a side view of a lidar device according to one or more embodiments of the invention shown and described herein;
Figs. 18 shows a side view of a lidar device according to one or more embodiments of the invention shown and described herein;
Fig. 19 shows a block diagram of an exemplary computing system for performing the computer-implemented methods disclosed herein;
Fig. 20 shows a side view of lidar device with an emitted ray traced along its optical path according to one or more embodiments of the invention shown and described herein;
Figs. 21A and 21B show a continuity analysis performed in a transformed field of view of a lidar device according to one or more embodiments disclosed herein;
Fig. 21C shows a projection of a set of continuous line segments projected onto image data which has had an edge detection algorithm applied to it according to one or more embodiments disclosed herein; and
Fig. 22 illustrates a system comprising a lidar device and imaging devices for implementing a method according to one or more embodiments disclosed herein.

### Detailed description

Throughout this disclosure the term "elevation angle" of a vector may refer to the angle between the vector and the x-y plane. The elevation angle of radiation emitted from a rotary lidar device may refer to the angle between the direction of travel of the radiation and the plane perpendicular to the axis of rotation of the rotary lidar source.

Throughout this disclosure the term "azimuthal angle" of a vector may refer to the angle between the projection of the vector in the x-y plane and a reference vector in the x-y plane. The azimuthal angle of radiation emitted from a rotary lidar device may refer to the angle between the projection of the radiation vector in the plane perpendicular to the axis of rotation of the rotary lidar source, and a reference vector in the plane perpendicular to the axis of rotation of the rotary lidar source.

Throughout this disclosure the term "tilt angle" may refer to the angle between a plane and the z axis. For example, the tilt angle of a planar reflective surface of a lidar device may refer to the angle between the plane of the reflective surface (or the normal to the surface) and the xy plane (or the z axis) of the device. Where a reflective surface is not planar (e.g. curved), the tilt angle may be defined by the angle between a plane representing the non-planar surface (or the normal to the plane) and the xy plane (or the z axis). The plane representing the non-planar surface may be defined by, for example, the tangential plane to a pre-determined point on the non-planar surface.

Throughout this disclosure the term "axis" of a pyramid is the axis coincident with the line taken from the vertex of the pyramid and extending perpendicularly to the base of the pyramid. The axis of a truncated pyramid is the axis coinciding with the line taken from the vertex of the pyramid without truncation and extending perpendicularly to the base of the pyramid.

Throughout this disclosure the term "gridded point distribution" may refer to a point distribution comprising a plurality of sets of points, each set formed in a line, the lines forming a plurality of intersections, wherein the density of points along each line is greater than the density of intersections along each line.

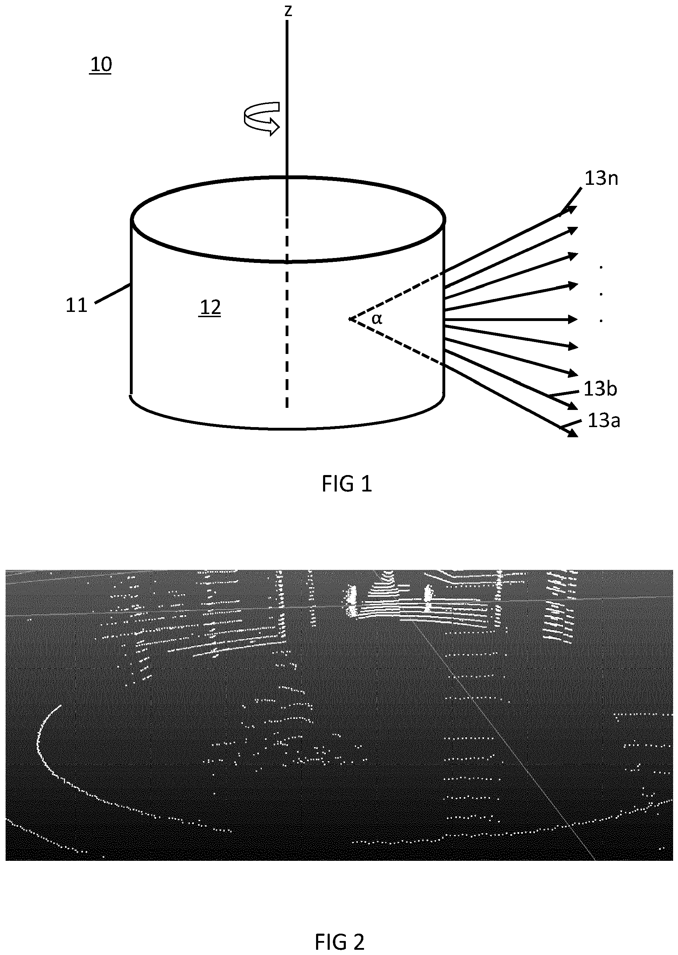

Fig. 1 shows an exemplary rotary lidar device 10. The rotary lidar device 10 comprises a housing 11 housing one or more laser emitters (not shown). The housing 11 comprises a cylindrical shell which is transparent at the wavelength of radiation emitted by the laser emitters (the shell may take other shapes so long as the rotating parts are able to rotate inside). The rotary lidar device 10 emits one or more beams of light 13a, 13b, ..., 13n. The beams 13 emitted by the laser emitters are emitted in different directions over a plurality of elevation angles, having a total angular range of α. For example, a plurality of laser emitters may be oriented at a plurality of elevation angles and each configured to emit a respective beam 13 at a respective elevation angle. The one or more beams 13 are further configured to rotate about a z-axis, such that the beams 13 are emitted at the respective elevation angle for a plurality of azimuthal angles about the z axis. For example, the rotary lidar device is configured to rotate the laser emitters about an axis z such that the beams 13 are rotated about the z axis. The rotary lidar device also comprises a detecting section comprising suitable detection optics and one or more detectors (not shown), configured to detect (and differentiate) the associated reflected beams of light from each of the plurality of beams 13. For example, the rotary lidar device 10 comprises a detector array or a plurality of emitter-detector pairs and a rotary detector, although any suitable detector setup may be used.

In use, the rotary lidar device 10 emits the plurality of beams 13 (e.g. in pulses) at a plurality of azimuthal angles and, for each beam, detects the associated light that is reflected back from the environment surrounding the device. Based on the time differences between the emitted pulse and the associated reflected pulse, and the azimuth angle and elevation angle of the emitted/reflected radiation, the distance between the lidar device and an object in the environment of the device is calculated. The co-ordinates of the object are calculated from the calculated distance, the elevation angle and the azimuthal angle of the radiation. As the distance and co-ordinates are calculated for a plurality of elevation angles and azimuthal angles, a three-dimensional picture of the surroundings can be rendered from the datapoint cloud. The rate at which the laser emitters are able to emit pulses is much greater than the rate at which the beams are rotated, such that the point density in the azimuthal direction is much greater than the point density in the elevation direction. Fig. 2 illustrates an exemplary rendering of the surroundings of lidar device 10 from the calculated distances from the reflected light. It can be seen that the point distribution comprises rings or slices of azimuthally dense datapoints, corresponding to the elevation angles of the laser emitters.

The wavelength of radiation emitted by the laser emitters may be any desired wavelength, in the electromagnetic spectrum. For example, the laser emitters may be configured to emit any infrared or visible radiation (for example 905nm or 1550nm). The radiation may be emitted at a plurality of wavelengths. The rotary lidar device 10 may be configured to emit radiation at any number of elevation angles. For example, the rotary lidar device may be configured to emit radiation at 16 to 128 elevation angles or more. The elevation angles may be evenly spaced apart, or unevenly spaced apart (i.e. concentrated in some elevation ranges). The elevation angles may be between ±45°. The rate of pulses emitted by the laser emitters may be 50 to 200Hz or in the tens of thousands of Hz (for example greater than 10 kHz, 30kHz or 50 kHz) and the beams 13 may be configured to rotate at a rate of 10Hz to 20Hz or several tens of Hz. Specifically the rate of pulse emitted by the laser emitters may be an order of magnitude or several orders of magnitude greater than the rate of rotation.

It will be understood that the material of the cylindrical shell (or housing) may be any suitable material which is transparent at the wavelength of the emitted radiation.

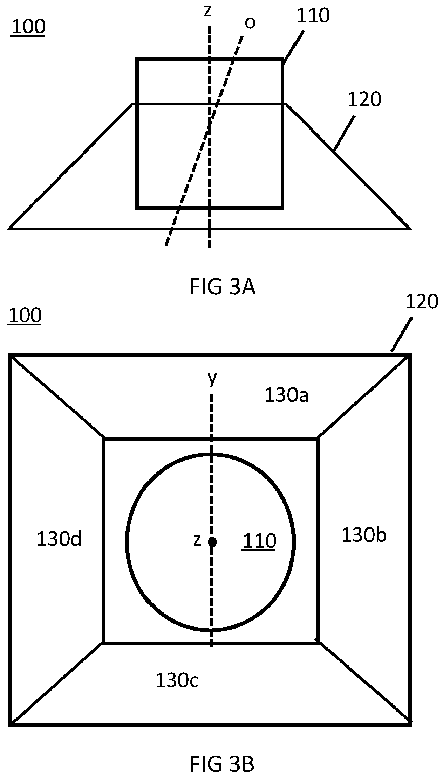

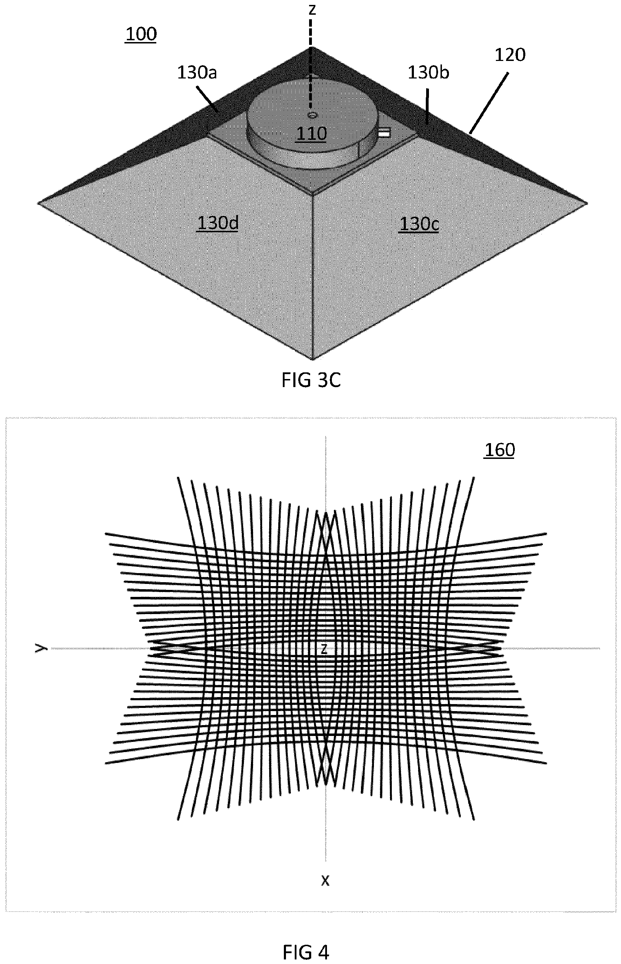

Fig. 3A shows a side view of a lidar device 100 according to one or more embodiments of the invention. Fig. 3B shows a top view of the lidar device 100 shown in Fig. 3A. Fig. 3C shows a perspective view of the lidar device 100 shown in Fig. 3A. The lidar device 100 comprises a rotary lidar source 110, for example rotary lidar device 10, and a reflector 120. The lidar device 100 may be fixed to an object (for example a vehicle or building).

The rotary lidar source 110 comprises at least one laser emitter. As in the case of the rotary lidar device 10 shown in Fig. 1, the rotary lidar source 110 may comprise one or more laser emitters. The one or more laser emitters are each configured to emit radiation from the rotary lidar source at a respective elevation angle, and are each configured to emit radiation at a plurality of azimuthal angles about a first axis and at the respective elevation angle as described above. The rotary lidar source also comprises one or more detectors configured to detect radiation reflected from the surroundings which is emitted from the one or more laser emitters (the azimuthal and elevation angle of the emitted/reflected radiation is determined, for example by the time sequence of laser firings and the lidar configuration). Whilst the rotary lidar source 110 may be the lidar device 10 shown in Fig. 1, it may be any lidar source which is configured to emit radiation azimuthally about a rotation axis at one or more fixed elevation angles. For example, the lidar source 110 may comprise a scanning lidar, and particularly a having one or more laser emitters and a mirror which rotates about 360° to emit radiation from the one or more laser emitters in a plurality of azimuthal directions and elevation angles.

Furthermore, the lidar device 100 comprises a reflector 120 fixed to the rotary lidar source 110. The reflector 120 is configured to reflect radiation emitted from one or more of laser emitters at a plurality of azimuthal angles for a plurality of elevation angles to generate a transformed field of view. The reflector 120 is shown in Fig. 3B as completely surrounding the circumference of the rotary lidar device 100 such that substantially all of the emitted radiation from the rotary lidar source 110 is reflected by the reflector, although in other embodiments the reflector may only partially surround the rotary lidar device 100. Furthermore, the reflector 120 may be configured to reflect radiation from all of the elevation angles, as in the case of lidar device 100, or it may be configured to only reflect radiation from some of the elevation angles, with radiation from the remaining elevation angles not interacting with the reflector 120 (for example being emitted from the lidar device in the same direction as if the reflector 120 was not present)

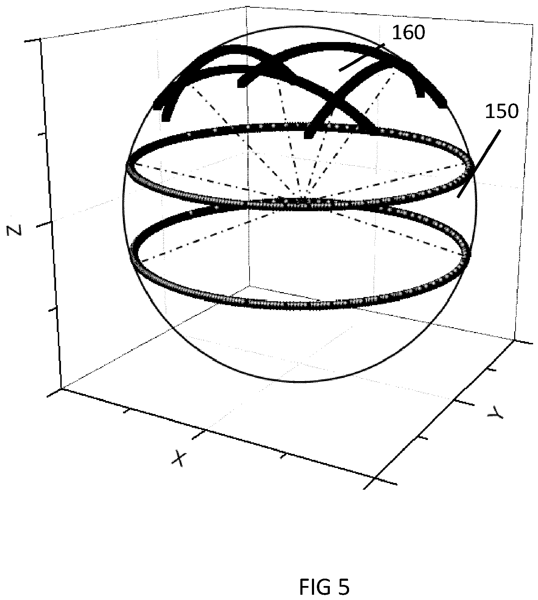

The reflector 120 of Figs. 3A to 3C comprises four planar reflective surfaces 130a to 130d surrounding the rotary lidar source 110. The radiation emitted by the rotary lidar source 110 is reflected by the planar reflective surfaces 130a to 130d, resulting in the radiation being reflected in the general direction of the z axis. The resulting point distribution of the emitted radiation when projected onto a plane perpendicular to the z axis of the rotary lidar source 110 is shown in Fig. 4. It can be seen that, as opposed to the rotary lidar device 10 which emits radiation away from the z-axis, the field of view 160 for the lidar device 100 is transformed to a more concentrated region of the surroundings about the z axis. Fig. 5 illustrates a perspective view of the field of view 150 without the reflector 120 present, which can be described as a cylinder of radiation emitted from the rotary lidar source, as compared to the field of view 160 with the reflector 120 present. The field of views 150 and 160 are projected onto a sphere surrounding the lidar device for the sake of simplicity. It will be understood that the field of views 150 and 160 shown in Fig. 5 are illustrated by the surface area viewable at a given distance from the lidar device and that the surface area viewable increases with distance (defined by the angular field of view of the device). It can be seen that the field of view is transformed to an area of the surroundings which was previously not observable by the rotary lidar source 110. Furthermore, in the case of the reflector 120 shown in Figs. 3A to 3C, as the transformed field of view 160 comprises a smaller solid angle than the solid angle of the untransformed field of view 150, the transformed field of view has an increased point density in at least a part of the transformed field of view 160, meaning a higher resolution view can be obtained.

The material of the reflective surfaces of the reflector 120 (and generally the reflectors disclosed herein) may be any suitable material which is reflective at the frequency or frequencies of the radiation emitted by the rotary lidar source 110. For example, a coated optically smooth metallic surface or a mirror with a suitable reflective coating material.

Furthermore, for the reflector 120 shown in Figs. 3A to 3C, the reflector comprises a plurality of planar reflective surfaces such that the transformed field of view generated comprises an at least partially gridded point distribution, as can be viewed in Fig. 4. The gridded point distribution assists in calculating object boundaries and surfaces, and further assists in integration of lidar with stereo imaging.

It will be understood that although the reflector 120 generates a transformed field of view with an increased point density and with a gridded point distribution, in other embodiments the transformed field of view may transform the field of view without forming a partially or completely gridded point distribution. The transformed field of view will depend on the geometry of the reflector 120. It will be appreciated by the skilled person that the reflector 120 may comprise any configuration of one or more reflective surfaces, and that the resulting transformed field of view will depend on the geometries of the reflective surfaces and their position and orientation relative to the rotary lidar device 110. The shape and configuration of the reflector 120 will depend on the desired application of the lidar device. For example, it may be desired to have a highly concentrated and gridded transformed field of view in the z direction, or it may be desired to have a partially transformed field of view in any other direction. The transformed field of view can be calculated by known ray tracing methods based on the configuration of the rotary lidar source 110 and the reflector 120.

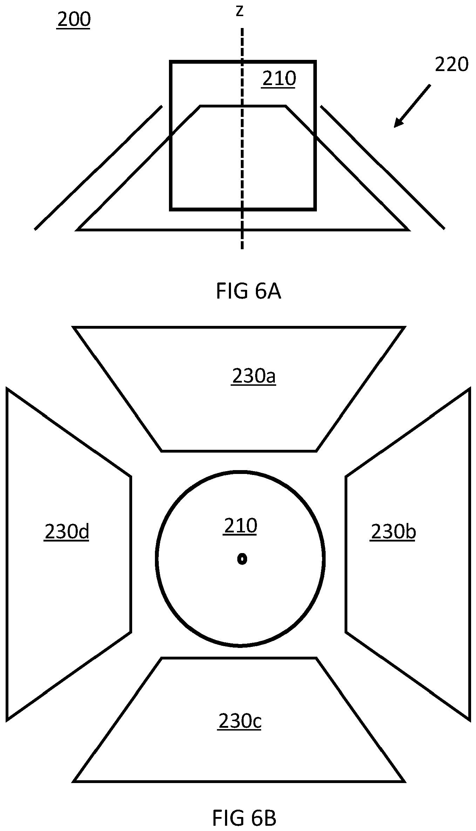

The reflector shown in Figs. 3A to 3C comprises fours reflective surfaces 130a to 130d which are secured together and to the rotary lidar source 110. However, the reflector may instead comprise one or more separate reflective surfaces that are secured to or about the rotary lidar source 110, and not necessarily to one another. Figs. 6A and 6B illustrate respective side and top views of such a lidar device 200 comprising a reflector 220, wherein the reflector comprises four reflective surfaces 230a to 230d which are not secured to one another.

As in the case of the reflector 120 shown in Figs. 3A to 3C, the reflectors disclosed herein may form some or all of the sides of a truncated pyramid. For example, the reflector 120 comprises four reflective surfaces forming the sides of a truncated square pyramid configured to reflect radiation emitted by the one or more emitters. Alternatively, the reflector 120 may comprise only some of the reflective surfaces 130a to 130d (i.e. only one, two or three of them). The other sides may be open or may comprise surfaces which are transparent or partially transparent to the emitted radiation. For example, in some applications it may be desired to transform only some of the field of view and leave another part of the field of view untransformed. The base of the pyramid may not be present, or may be a material which is transparent to the radiation emitted by the rotary lidar source. The truncation of the pyramid may be sized and shaped to securely receive the rotary lidar source as in the case of lidar device 100. Such a truncated pyramid allows for a stable mechanical connection between the lidar source and the reflector, facilitating calibration, alignment and inhibiting vibrations from affecting the calibration of the system (i.e. providing a stable, secure connection). Appropriate connections to the rotary lidar source for electrical power and data communication may be made through the hole formed by the truncation of the pyramid.

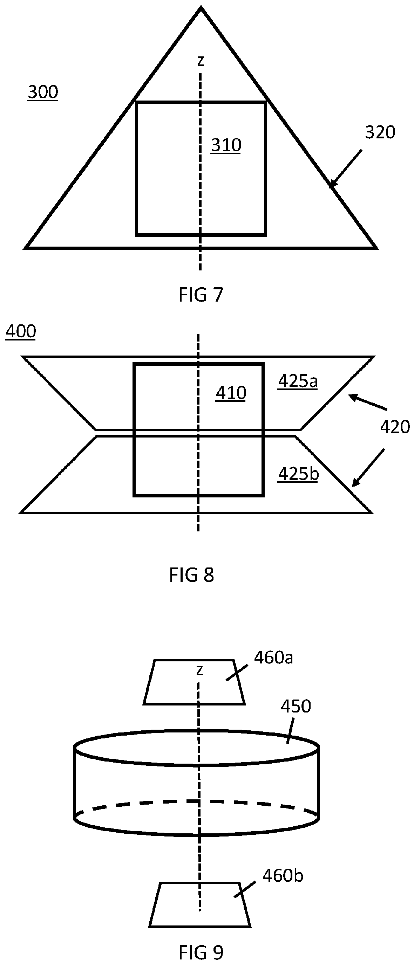

Alternatively, the reflector may comprise one or more sides of a pyramid which is not truncated. For example, Fig. 7 shows a side view of a lidar device comprising a rotary lidar source 310 and reflector 320, wherein the reflector 320 forms the sides of a pyramid which is not truncated. The reflector 320, for example, may be comprised of some of all sides of a square pyramid, as described above. As above, the base of the pyramid may not be present, or may be a material which is transparent to the radiation emitted by the rotary lidar source. The rotary lidar source 310 may be secured to the inner surfaces of the reflector 320, for example by welding or adhesive or any suitable securing mechanism. Appropriate connections to the rotary lidar source for electrical power and data communication may be made through a hole machined through the reflector.

The reflectors disclosed herein may be sized and shaped to completely house the rotary lidar source, as in the case of the lidar device 300, or may only partially house the rotary lidar source, as in the case of lidar device 100.

The reflectors 120, 220 and 320 disclosed above are all configured to direct the emitted radiation generally towards one axial direction to generate one transformed field of view region (for example the field of view 160 illustrated in Figs. 5A and 5B). However, in other embodiments, the reflector may be configured to direct the emitted radiation in several directions to generate multiple separate sub-regions in the field of view.

For example, Fig. 8 shows a side view of a lidar device 400 comprising a rotary lidar source 410 and a reflector 420 secured to the rotary lidar source 410. The reflector 420 comprises a first reflector part 425a and a second reflector part 425b. The first reflector part 425a is configured to reflect a first portion of radiation emitted by the rotary lidar source 410 and a second reflector part 425b to reflect a second portion of radiation emitted by the rotary lidar source 410. The resulting transformed field of view comprises two sub-regions. Fig. 9 illustrates a side view of the field of view 450 of the rotary lidar source 410 without the reflector 420 present, which can be described as a cylinder of radiation emitted from the rotary lidar source, as compared to the field of view 460 with the reflector 420 present. It can be seen that the field of view is transformed to two opposing sub-regions of the surroundings which were previously not observable by the rotary lidar source 410.

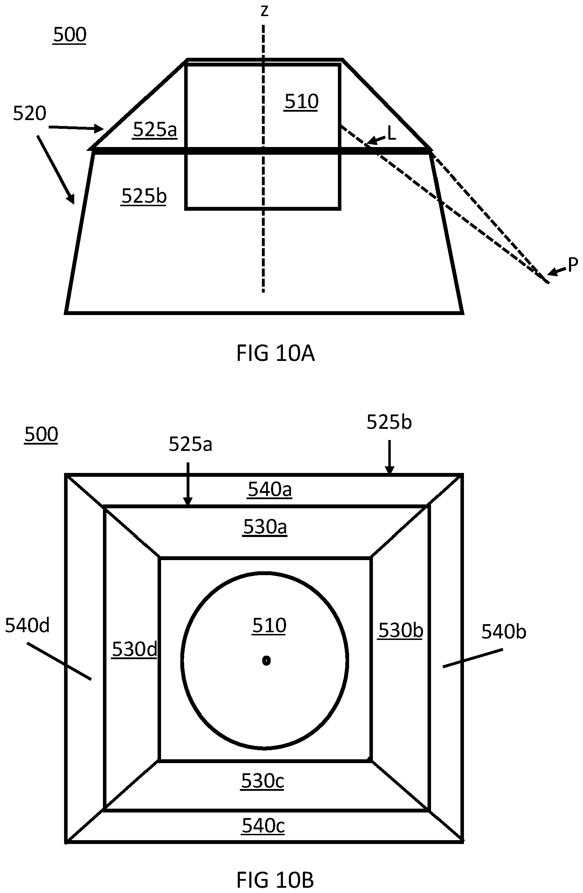

Figs. 10A and 10B show respective side and top views of a lidar device 500 comprising a rotary lidar source 510 and a reflector 520. The reflector 520 is configured to reflect radiation emitted by the rotary lidar source 510 to generate a transformed field of view. The reflector comprises a first reflector part 525a and a second reflector part 525b, each configured to reflect a portion of the radiation emitted by the rotary lidar source 510. The first reflector part 525a comprises four planar reflective surfaces 530a to 530d surrounding the rotary lidar source 510 and is secured to the rotary lidar source 510. The four planar reflective surfaces 530a to 530d form the sides of a first truncated pyramid (although in other embodiments they may form the sides of a pyramid which is not truncated). The second reflector part comprises four planar reflective surfaces 540a to 540d forming the sides of a second truncated pyramid stacked on the first pyramid and secured to the first pyramid. The second truncated pyramid comprises planar reflective surfaces having a steeper tilt angle compared to the first pyramid. In other embodiments the first reflector part 525a and/or the second reflector part 525b may comprise only some of the sides of the pyramid. The other sides may be open or may comprise surfaces which are transparent to the emitted radiation.

Such a configuration of a reflector comprising stacked pyramids with planar reflective surfaces of different tilt angles may allow for a more compact reflector, especially when the reflector is configured to surround a lidar source having a wide range of elevation angles. For example, a lidar source having an untransformed field of view which has a large maximum/minimum elevation angle of, for example, ±45° may require a large reflector in order to reflect all of the light emitted. Fig. 9A shows a light ray L emitted at an elevation angle. It can be seen that if the reflector were to comprise only the first reflector part 525a, then the reflector would be much wider in order to be able to reflect the light ray L at a point P. The second reflector part 525b therefore allows for a more compact reflector. Furthermore, a reflector comprising stacked pyramids may be preferred if it is desired to concentrate the transformed field of view into a smaller area, as the steeper tilt angle means that the radiation emitted from the higher elevation angles (e.g. the radiation reflected by the second truncated pyramid) is directed more closely toward the z-axis of the lidar device, as compared to if it were reflected by the first pyramid.

Whilst the lidar devices illustrated in Figs. 3A to 3C, 6, 7, 8 and 10 comprise reflectors which form the sides of a square pyramid, it will be appreciated that the surfaces of the reflectors may instead form the sides of a pyramid having any regular or irregular polygonal shape. For example, the reflector may form the sides of one or more triangular, square, rectangular, pentagonal, hexagonal, regular polygonal or irregular polygonal pyramid. The resulting field of view can be calculated using known ray-tracing methods.

Similarly, whilst the reflector 220 shown in Figs. 5A and 5B comprise four reflective surfaces, it will be appreciated that the reflector may comprise any number of reflective surfaces. The resulting field of view can be calculated using known ray-tracing methods.

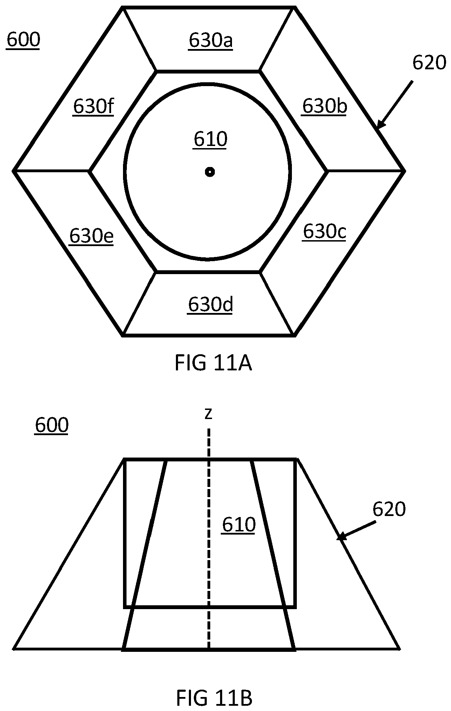

For example, Figs. 11A and 11B show respective top and side views of a lidar device 600 comprising a rotary lidar source 610 and a reflector 620. The reflector 620 is configured to reflect radiation emitted by the rotary lidar source 610 to generate a transformed field of view. The reflector 620 comprises six planar reflective surfaces 630a to 630f surrounding the rotary lidar source 610 and forming the sides of a truncated hexagonal pyramid. As previously discussed, the reflector 620 may comprise only some of the sides of the pyramid, and the other sides may be open or may comprise surfaces which are transparent to the emitted radiation. The reflector may instead form the sides of a pyramid which is not truncated. Further, the base of the pyramid may be open or may comprise a surface which is transparent to the emitted radiation.

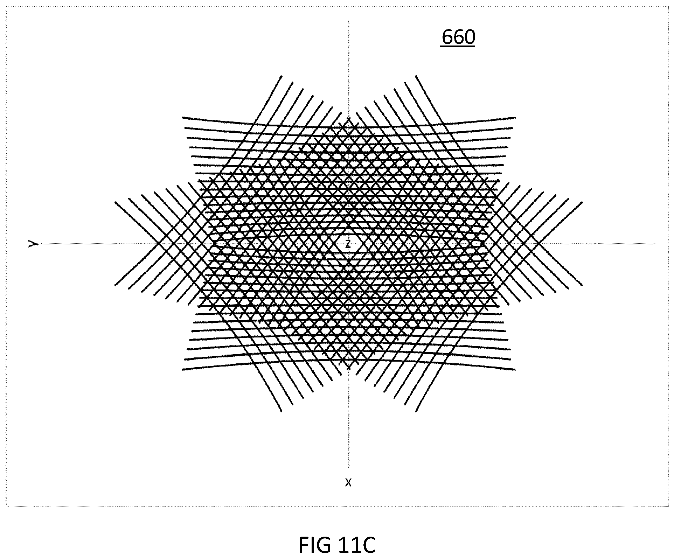

The resulting point distribution of the emitted radiation when projected onto a plane perpendicular to the z axis is shown in Fig. 11C. It can be seen that, as opposed to the rotary lidar device 10 which emits radiation away from the z-axis, the field of view 660 for the lidar device 100 is transformed to a more concentrated region of the surroundings about the z axis. Further, it can be seen that the hexagonal reflector 620 generates agridded point distribution, the grid comprising closed cells shaped as hexagons, triangles, diamonds and so on, the grid being is denser than the gridded point distribution of the reflector 120.

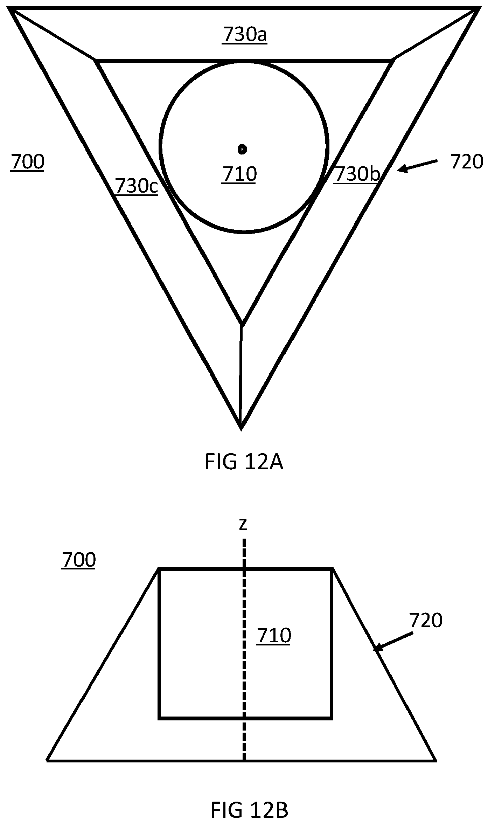

Figs. 12A and 12B show respective top and side views of a lidar device 700 comprising a rotary lidar source 710 and a reflector 720. The reflector 720 is configured to reflect radiation emitted by the rotary lidar source 710 to generate a transformed field of view. The reflector 720 comprises three planar reflective surfaces 730a to 730c surrounding the rotary lidar source 710 and forming the sides of a truncated triangular pyramid. As previously discussed, the reflector 720 may comprise only some of the sides of the pyramid, and the other sides may be open or may comprise surfaces which are transparent to the emitted radiation. The reflector may instead form the sides of a pyramid which is not truncated. Further, the base of the pyramid may be open or may comprise a surface which is transparent to the emitted radiation.

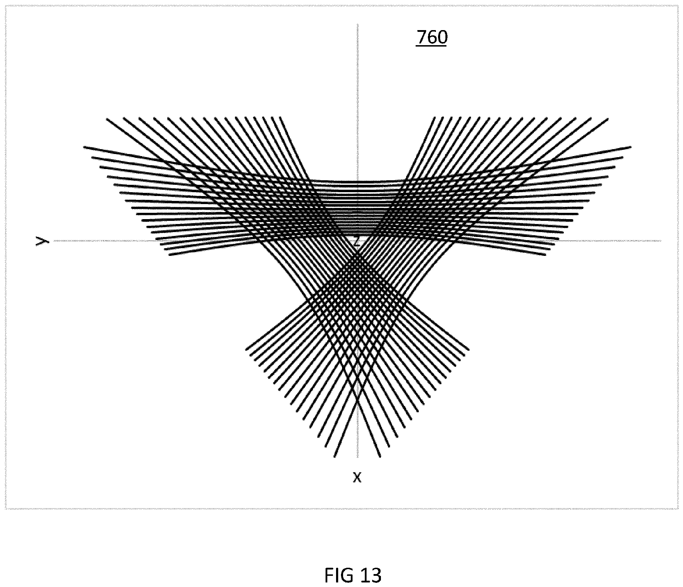

The resulting point distribution of the emitted radiation when projected onto a plane perpendicular to the z axis is shown in Fig. 13. It can be seen that, as opposed to the rotary lidar device 10 which emits radiation away from the z-axis, the field of view 760 for the lidar device 700 is transformed to a more concentrated region of the surroundings about the z axis. The reflector 720 provides a triangular grid of points forming diamond-shaped cells with wider field of view than the reflector 120, and with a lower point density.

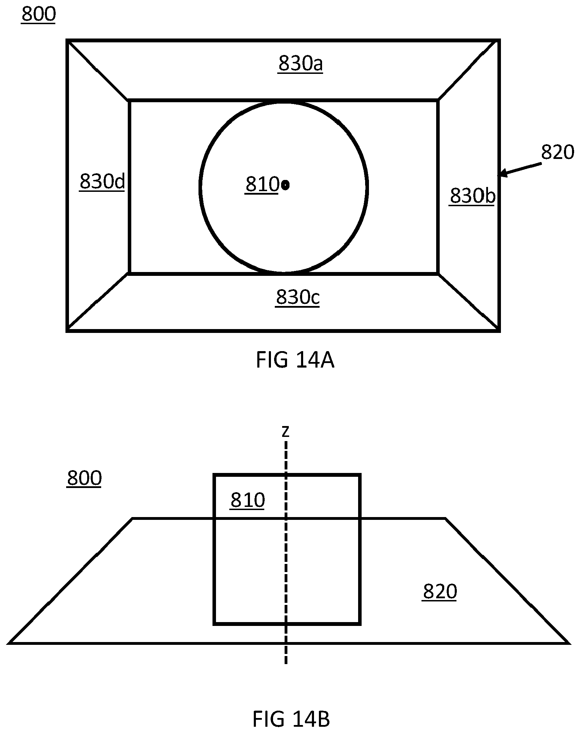

Figs. 14A and 14B show respective top and side views of a lidar device 800 comprising a rotary lidar source 810 and a reflector 820. The reflector 820 is configured to reflect radiation emitted by the rotary lidar source 810 to generate a transformed field of view. The reflector 820 comprises four planar reflective surfaces 830a to 830d surrounding the rotary lidar source 810 and forming the sides of a truncated rectangular pyramid. As previously discussed, the reflector 820 may comprise only some of the sides of the pyramid, and the other sides may be open or may comprise surfaces which are transparent to the emitted radiation. The reflector may instead form the sides of a pyramid which is not truncated. Further, the base of the pyramid may be open or may comprise a surface which is transparent to the emitted radiation.

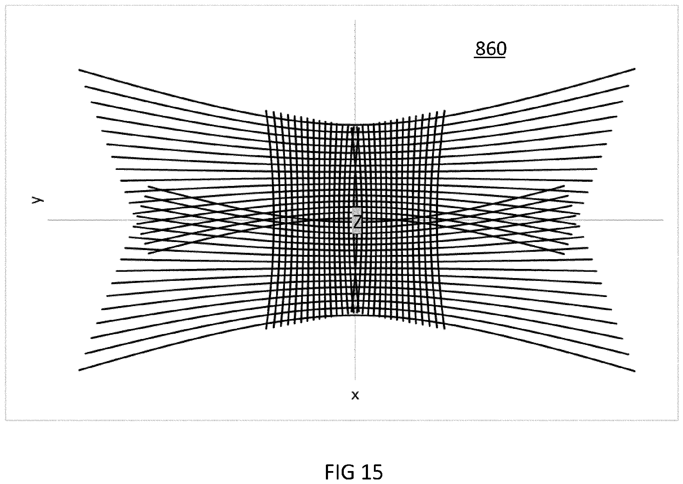

The resulting point distribution of the emitted radiation when projected onto a plane perpendicular to the z axis is shown in Fig. 15. It can be seen that, as opposed to the rotary lidar device 10 which emits radiation away from the z-axis, the field of view 860 for the lidar device 800 is transformed to a more concentrated region of the surroundings about the z axis. The reflector 820 provides a rectangular grid of points with wider field of view in one direction and a narrower, field of view in the other. Such a reflector is useful in applications requiring a very wide horizontal field of view but an increased datapoint density in the centre of the field of view.

In another embodiment, the reflector may comprise one or more curved reflective surfaces (e.g. one or more concave or a convex surfaces or a parabolic surface surrounding or partially surrounding the rotary lidar source). In such embodiments, the rotary lidar or the lidar device comprises one or more compensating optical elements configured to compensate for the convergence or divergence of the emitted radiation introduced by the curved reflective surface such that the emitted light remains collimated and the returning light is fully focused on the detector. For example, if the reflector comprises a concave reflective surface, the rotary lidar or the lidar device may include one or more negative optical elements for compensating the collimation of the radiation which is emitted towards the concave reflective surface. On the other hand, if the reflector comprises a convex reflective surface, the rotary lidar or the lidar device may include one or more positive optical elements for compensating the collimation of the radiation which is emitted towards the convex reflective surface. The reflective surface may be curved in only one axis, in which case the compensating element is configured to correct for the convergence or divergence in that axis, or may be curved in both axes, in which case the device may comprise compensating elements to correct for convergence or divergence in both axes. It will be appreciated by the skilled person that the exact optics used will depend on the specific curved surface used, and on the internal optical layout of the rotary lidar source. The compensating element to be used can be calculated for a particular lidar device using known ray tracing methods, so that collimation of the laser radiation is obtained at the exit of the lidar device and the reflected light received at the detector/detectors of the lidar device is in focus.

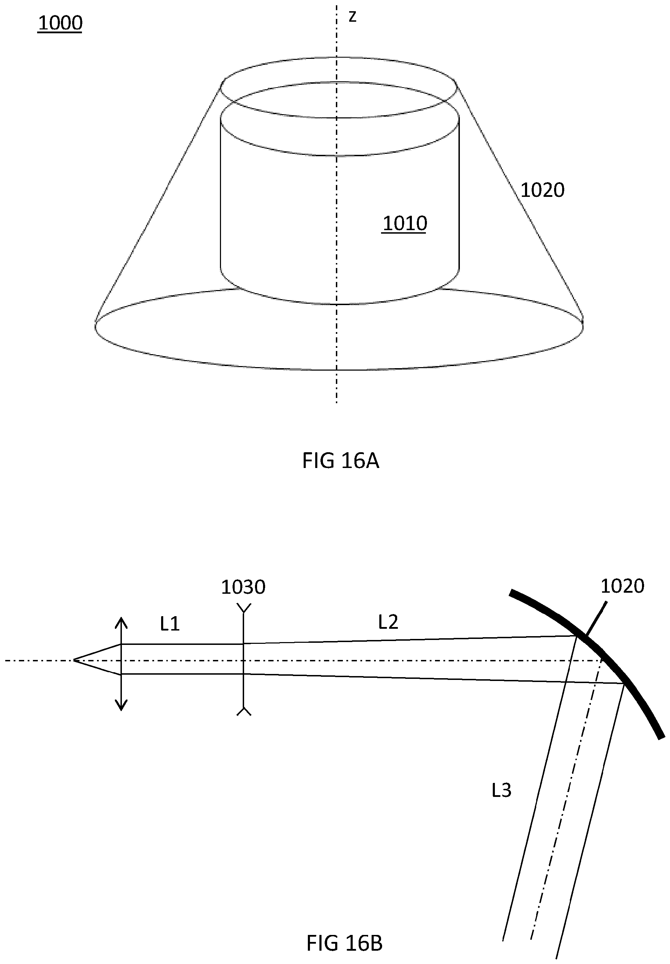

Fig. 16A shows a side view of a lidar device 1000 according to one or more embodiments of the invention. The lidar device 1000 comprises a rotary lidar source 1010, for example a rotary lidar device 10, and a reflector 1020. The reflector 1020 comprises a curved reflective surface, and more particularly a conically concave reflective surface (i.e. with curvature along only one axis). Fig. 16B shows a ray tracing diagram for an optical layout similar to the one corresponding to the lidar device 1000 shown in Fig. 16A, where a collimated light beam L1 is reflected by a conically-shaped mirror 1020 which causes the beam to converge along one axis. A compensating element 1030 (more specifically a negative cylindrical element) is inserted into the optical path, which transforms the beam L1 into a divergent beam L2. The beam L2 is then reflected by the reflector 1020. The converging effect of the reflector 1020 is compensated by the diverging effect of the compensating element 1030 such that the lidar device 1000 still emits a collimated beam L3. Accordingly, the lidar device 1000 functions in the same manner as described in the embodiments above which use planar reflective surfaces, except that the transformed field of view in the case of the lidar device 1000 will consist of a point distribution forming concentric circles about the z-axis instead of a grid. It will of course be understood that the ray tracing diagram is for illustration only. In particular, there are different locations along the optical path where the compensating element 1030 could be placed.

It is noted that for a given elevation angle, the reflective surfaces encountered by the radiation as it rotates should have the same curvatures so that the corrective optics applied to that elevation angle is corrective for all azimuthal angles. However, it may be that different curvatures are encountered for different elevation angles so that the corrective optics applied to different elevation angles differ (for example in rotary lidar devices which comprises laser-detector pairs with individualized optical paths).

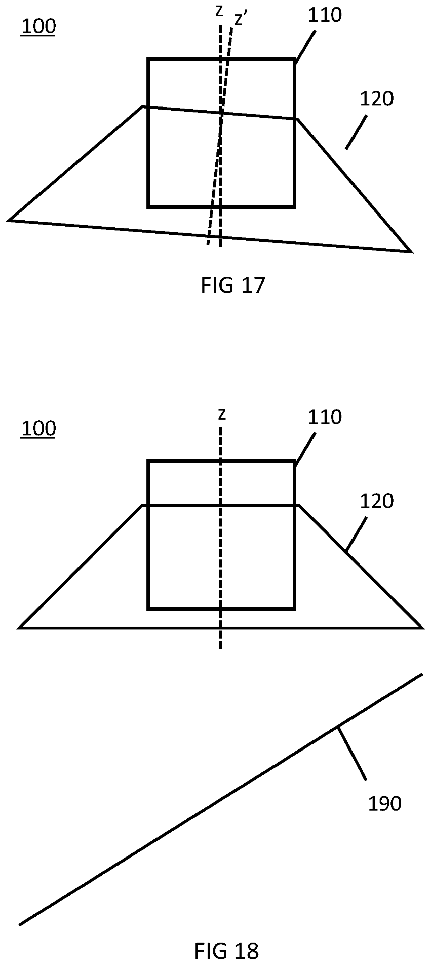

It is noted that whilst in the embodiments disclosed above, surfaces of the reflector are symmetric about the z axis (e.g. the axis of the pyramid or pyramids align with the z axis of the rotary lidar source), the reflector may instead be angularly offset from the z-axis. For example, in the case of the lidar device 100 shown in Figs. 3A to 3C, the axis of the pyramid formed by reflector 120 may instead be offset from the z axis, as indicated in Fig. 17 by the offset axis z'. The resulting transformed field of view can be calculated using known ray tracing methods.

Whilst the above embodiments comprise reflectors which are fixed relative to the rotary lidar sources, the reflectors may instead be movable relative to the rotary lidar source. For example, the tilt angle (relative to the z axis of the rotary lidar source) of one or more of the reflective surfaces of the reflectors disclosed herein may be adjustable. The tilt of each reflective surface may be independently adjustable, In other words, the reflective surfaces may be rotatable towards and away from the z axis of the rotary lidar source. For example, the lidar device may comprise one or more actuators (such as an electronic stepper motor) for adjusting the tilt angles of one or more reflective surfaces (i.e. rotating the reflective surface towards or away from the z axis).

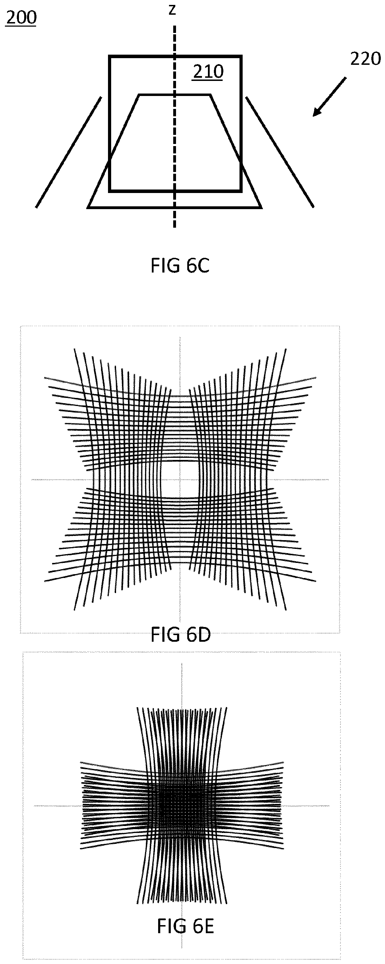

For example, the tilt angle of the reflecting surfaces 230a to 230d shown in Fig. 6B may be adjustable. Fig. 6C shows the reflector 220 in a second configuration in which the tilt angle of the surfaces has been adjusted so that the surfaces are moved inwards towards the z axis of the rotary light source 210.

Fig. 6D shows the resulting point distribution of the emitted radiation of the device 200 in the configuration of Fig. 6A, the radiation being projected onto a plane perpendicular to the z axis of the rotary lidar source 210. Fig. 6E shows the resulting point distribution of the emitted radiation of the device 200 in the configuration of Fig. 6C, the radiation being projected onto a plane perpendicular to the z axis of the rotary lidar source 210. It will be seen that a wider tilt angle produces a wider distribution of emitted radiation with a larger field of view and a lower point density. A narrowed tilt angle results in a concentrated distribution of emitted radiation, with a higher point density, and in particular a higher point density in the proximity of the z axis. The tilt angle can therefore be adjusted based on the requirements of the application.

It will be appreciated that whilst in the illustrated embodiment, the tilt angles of the reflecting surfaces 230a to 230d are adjusted uniformly, they may be adjusted by different amounts. Similarly, it may be that only some (one or more) of the reflecting surfaces may have their tilt angle adjusted, whereas others may be fixed.

In further embodiments, any of the lidar devices or reflectors disclosed herein may further be rotatable about a second axis, which may or may not coincide with the first axis. For example, the lidar device or reflector may be configured to rotate at a continuous rate, or the orientation of the lidar device or reflector about the second axis may be selectable. The second axis may be aligned with the first axis or may be angularly offset from the first axis (for example perpendicular). In such configurations, the lidar device also comprises a mechanism for measuring the rotation of the lidar device or reflector about the second axis, as well known in the art. For example, the lidar device may comprises a rotary position sensor such as a rotary encoder and suitable electronics for determining the rotary position from the signal of the rotary encoder.

For example, the reflector 120 illustrated in Figs. 3A to 3C may be rotatable about the z axis relative to the rotary lidar source 110 (for example the reflector may be slidably secured to the rotary lidar source 110). Accordingly, the field of view 160 shown in Fig. 4 will be rotatable about its centre. Such rotation keeps the field of view 160 centred on the z axis whilst the gridded point distribution rotates about the z-axis. Integration of datapoints as the reflector 120 or device 100 rotates will therefore result in a denser point distribution in the field of view 160. Alternatively, the lidar device 100 as whole may be rotatable about the z axis (i.e. relative to the object on which it is configured to be mounted), resulting in the same rotation of the field of view 160. The orientation of the reflector 120 relative to the rotary lidar source 110 as it rotates may be measured by a rotary position sensor. Likewise, the orientation of the lidar device as a whole relative to the object on which it is mounted may be measured by a rotary position sensor.

In another example, the reflector 120 may be rotatable relative to the rotary lidar source 100 about an axis angularly offset from the z axis relative to the rotary lidar source 110, or lidar device 100 as a whole may be rotatable about an axis which is offset from the z axis (relative to the object on which it is configured to be mounted). For example, the reflector 120 or lidar device may be rotatable about the axis marked "o" in Fig. 3A, which is angularly offset from the z axis, such that the field of view 160 of the device rotates. Such a rotation of the field of view 160 allows for a wider field of view of the object's surroundings. Integration of datapoints as the reflector 120 or device 100 rotates will therefore result in a wider image of the surroundings.

In preferred embodiments, the lidar device may be rotatable about a second axis which is perpendicular to the first axis. For example, the lidar device 100 may be rotatable about the y axis shown in Fig. 3B, which is perpendicular to the z axis. This configuration allows for the device to provide a panoramic view.

In other embodiments, the lidar devices disclosed herein may be mountable onto a gyroscopic system with suitable controls such that the field of view can be pointed towards any desired direction.

In some embodiments, the reflectors disclosed above may be a first reflector, and the lidar device may additionally comprise a second reflector configured to reflect radiation emitted by the first reflector, wherein the second reflector is rotatable to adjust the field of view of the lidar device. For example, the lidar device 100 shown in Figs. 3A to 3C may additionally comprise a second reflector 190 as shown in Fig. 18. Second reflector 190 may be a planar reflective surface and is configured to reflect the radiation emitted by the first reflector 120. As the second reflector 190 is rotatable (for example about the z axis although it may be rotatable about an offset axis), the field of view of the lidar device 100 is adjustable. The second reflector 190 may be configured to rotate continuously or its orientation may be selectable. For example, the tilt of the planar surface of the second reflector, relative to the axis of rotation of the lidar source (z axis), is 45° but may be between, for example, 30° to 60°. The second reflector may be rotatably mounted to the lidar device or it may be rotatably mountable to the object on which the lidar device is to be mounted, and its orientation relative to the object on which the lidar device is mounted may be measured by a position sensor.

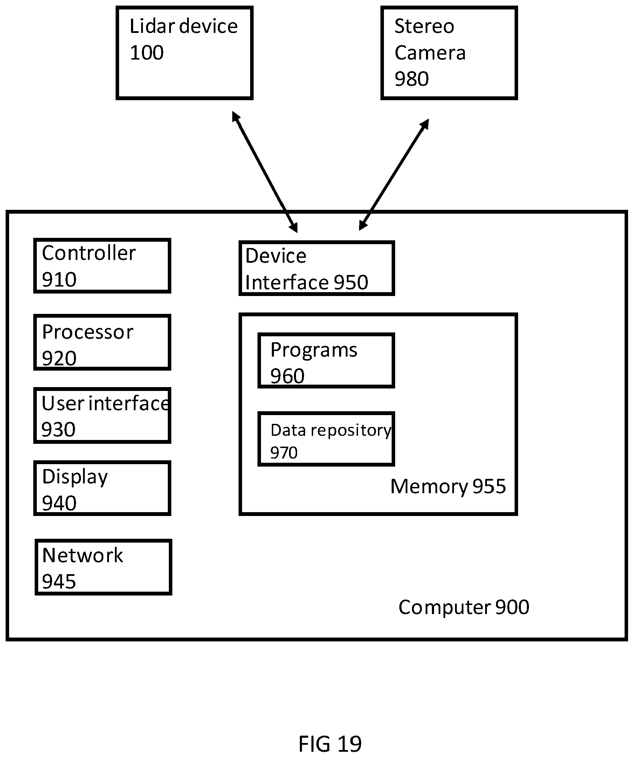

Fig. 19 shows a block diagram of an exemplary computing system 900 for performing the computer-implemented methods disclosed herein. It will be appreciated by the skilled person that the computer system 900 shown in Fig. 19 is one of many systems that could be used to implement the methods disclosed herein. In other examples, the computer system may a distributed computer system, for example comprising one or more servers or client computing systems, using any known distributed computing technique. In some examples, a general-purpose computer or any other processing system may be used to implement the methods disclosed herein. Furthermore, the methods may be implemented in software, hardware, or any combination of these to achieve the methods disclosed herein.

Computing system comprises one or more controllers 910, one or more processors 920, user interfaces 930, displays 940, network connections 945 device interfaces 950, and memories 955 storing programs 960 and data repository 970. Programs 960 may include one or more computer program products which when executed by the computer, causes the computer to carry out one or more of the methods disclosed herein. The device interface 950 provides an interface for communication with a lidar device 100 (or any other lidar device disclosed herein) and may also provide an interface for communication with an imaging system 980 (e.g camera or stereo camera).

It will be appreciated by the skilled person that the computer system 900 may be powered by any suitable powering means. The memory 955 may comprise one or more volatile or non-volatile memory devices, such as DRAM, SRAM, flash memory, read-only memory, ferroelectric RAM, hard disk drives, floppy disks, magnetic tape, optical discs, or similar. Likewise, the processor 920 may comprise one or more processing units, such as a microprocessor, GPU, CPU, multi-core processor or similar. The device interface 950 may comprise wired connections, such as optic, fiber-optic, ethernet or similar, or any suitable wireless communication.

In other examples, some components shown in Fig. 18 may not be present. For example, in the methods disclosed herein that do not require a manual user input or a display, the display 940 and some of the one or more user interfaces 930 may not be required. In further examples, any user input may be provided externally instead via a network connection 945 of the computer system 900.

A computing system such as the computer 900 may be used to implement a method of computing the physical co-ordinates of datapoints from a lidar device according to the present invention.

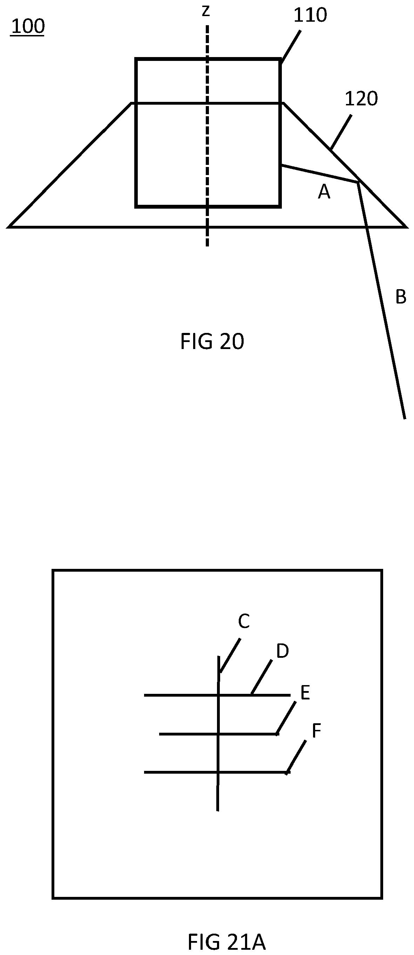

Fig. 20 shows a side view of lidar device 100 with an emitted ray traced along its optical path. The emitted ray travels a distance A to the reflector 120, is reflected by the reflector 120 to be emitted from the lidar device 100 and travels a distance B to an object. The ray is then reflected by the object, travels the distance B back to the reflector 120, is reflected by reflector 120 and travels the distance A back to the rotary lidar device 110 where it is detected. Using the time of flight between the emitted radiation and the reflected radiation that is detected, the total distance travelled (2A + 2B) and the total distance to the object (A + B) may be calculated and thus the distance to the object may be calculated.

A computer-implemented method of computing co-ordinates of datapoints from a lidar device may be implemented as follows. The computer may receive a plurality of datapoints from the rotary lidar source, each datapoint comprising an azimuthal angle and elevation angle of the emitted/received radiation, and an indication of the total distance travelled by the radiation to an object (i.e. distance A+B). This information is obtained from the rotary lidar source 110 by the computer. The indication of the total distance travelled may be the total distance travelled or the distance to the object, or it may be the raw time of flight data. The computer may itself calculate the total distance travelled by the radiation to the object from the raw time of flight data.

For each received datapoint, the computer may then calculate a unit vector of the emitted radiation emitted from the lidar device at the given azimuthal angle and elevation angle. In particular, the shape and position of the reflector relative to the rotary lidar source may be known (i.e. by calibration or by the reflector being positioned relative to the rotary lidar source in a pre-determined fixed position). This information may be saved in the memory of the computer. For a given elevation and azimuthal angle, the radiation emitted by the rotary lidar source impacts the reflector at a point determined by the elevation angle, the azimuthal angle and the position of the reflector relative to the rotary lidar device. As the position and shape of the reflector relative to the rotary lidar source is known, the computer may readily calculate the unit vector of the radiation emitted by the lidar device (for example by ray tracing techniques using the known geometry of the lidar device). More specifically, the computer may calculate the unit vector of the radiation emitted by the rotary lidar source at the given azimuthal angle and elevation angle. The computer may then calculate the unit vector of the radiation reflected by the reflector by applying the law of reflection to the emitted unit vector and the normal of the corresponding mirror at the point of reflection. The coordinates of the datapoint is then calculated from the unit vector of the reflected radiation and the total distance to the object.

In embodiments where the rotary lidar source and the reflector are pre-calibrated (i.e. the rotary lidar source is fixed to the reflector in a known configuration), the unit vector of the radiation emitted from the lidar device for a given elevation and azimuthal angle may be saved in the computer memory in a lookup table or similar. Alternatively, the computer may comprise known ray-tracing algorithms to calculate the unit vector from the elevation angle, the azimuthal angle and the positions of the rotary lidar source and reflector.

In applications which do not require great accuracy and where the distance between the lidar device and the object is large (i.e. where B is several orders or magnitude larger than A), then the distance to the object can be considered as the total distance travelled by the radiation (2A + 2B) divided by two. The calculated distance to the object and the direction of the unit vector can then be used to generate the coordinates of the object in the coordinate system of the lidar device. In some embodiments, the calculated coordinates are saved in the memory and may be provided as an input to other programs in the computer. For example, the point cloud of coordinates can be used in object segmentation software, or the data can be integrated over multiple timeframes to extract static and moving objects in the field of view (i.e. by comparing the point cloud in multiple timeframes). In some embodiments, the coordinates of the datapoints are rendered on a display to render an image of the surroundings of the lidar device.

In applications where the distance between the lidar device and the object is not large (i.e. where B is not several orders of magnitude larger than A), then the distance to the object can be considered as the distance B. Thus, the computer may additionally be configured to calculate the distance A travelled by the emitted radiation from the rotary lidar source to an impact point on the surface of the reflector for the given azimuthal angle and elevation angle of the datapoint (i.e. using known ray tracing elements and the known position and shape of the reflector). The computer may then be configured to calculate the distance B by subtracting the calculated distance A from the total distance to the object. The calculated distance B and the direction of the unit vector can then be used to generate the coordinates of the object in the coordinate system of the lidar device. Optionally an exact distance to the object can be calculated from the coordinates.

The method may also further comprises performing a continuity analysis. In embodiments where the reflector is configured to generate an at least partially gridded point distribution in the transformed field of view, the continuity analysis may comprise the steps of: a) determining one or more points of discontinuity along a first line in the gridded point distribution, the points of discontinuity defining a first continuous line segment of an object; b) selecting a second line which crosses the first continuous line segment; and c) determining one or more points of discontinuity along the second line to define a second continuous line segment of the object. This process may be performed iteratively for all crossing lines encountered in the process.

The one or more points of discontinuity can be determined from the difference in coordinates of neighbouring datapoints using edge detection algorithms well known in the art. For example, the conditions for continuity along in the point distribution may be based on depth jump, derivatives or angular changes between datapoints as well known in the art.

Fig. 21A shows a continuity analysis performed in a transformed field of view of a lidar device according to one or more embodiments disclosed herein (for example the lidar device 100 shown in Fig. 3C having the gridded point distribution shown in Fig. 4). In the continuity analysis, two points of discontinuity are detected along a first line, the points of discontinuity defining a continuous line segment C of an object (alternatively there may only be one point of discontinuity detected, meaning that the continuous line segment extends to the edge of the field of view). The points of discontinuity are detected, for example, by detecting a jump in distance between the neighbouring datapoints along the line which is greater than a predetermined threshold. Further lines in the gridded point distribution are then selected which cross the continuous line segment C, and the points of discontinuity along those lines are also detected to define further continuous line segments D, E, F of the object.

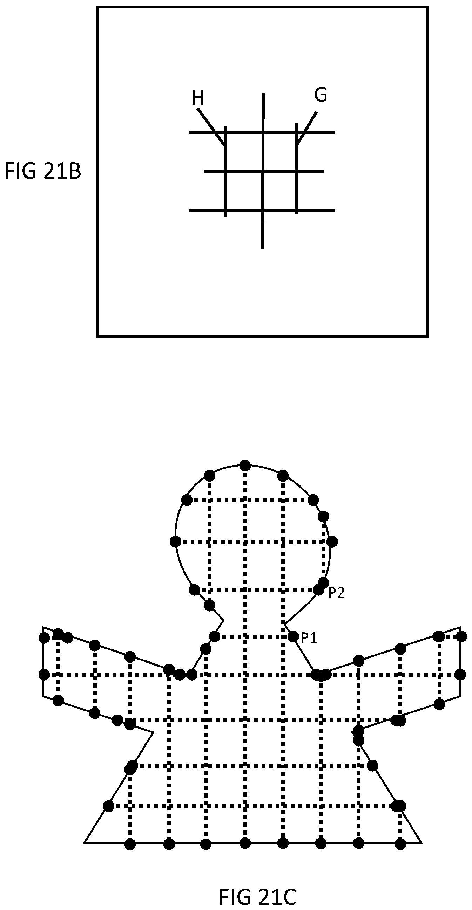

The same steps may also be performed for lines D to F, resulting in the detection of continuous line segments G and H as shown in Fig. 21B. This process may be performed iteratively for each line which crosses a continuous line segment until there are no new lines which cross a continuous line segment.

The plurality of discontinuous points may then be interpolated to calculate a boundary of the object in the field of view.

The boundary of the object may further be refined by using image data of the object. In particular, there may additionally be provided a camera whose position and orientation relative to the lidar device is known (i.e. the position and orientation is calibrated). Accordingly, from the known position and orientation of the camera relative to the lidar device, the image data from the camera may be projected onto the gridded point distribution using the known relative positions and orientations of the camera and lidar device. An edge detection analysis may be performed on the image data, such as any gradient-based, Canny or Laplace edge detection. The boundary of the object may be calculated from both the discontinuous points from the lidar data and the boundary calculated from the image data. The camera may be an imaging device of a stereo camera.

More particularly, when the camera and lidar are calibrated (i.e. their relative positions are known), the discontinuous points in the lidar datapoint distribution may be projected onto the pixels of the image data and their pixel locations determined. For those pixels, it may then be determined if the edge detection algorithm for the image has found an edge in the image that extends between two points of discontinuity (i.e. extends between the pixels of the discontinuous points or in neighbouring pixels of each discontinuous point). If an edge has been found, then the pixels defining said edge may be saved. This process may be performed iteratively for each pair of neighbouring discontinuous points until a set of pixels forming a closed boundary is defined. For the subset of pixels defining the edges, the physical coordinates for each pixel can be calculated by assuming that their depth-coordinate varies smoothly between the two discontinuous points connected by this edge section (in other words, the depth of the edge is known at the discontinuous points from the lidar data). As the direction of the pixel is known (because the position of the camera relative to the lidar device is known), then the xyz coordinates of the edge for each pixel can be calculated from the pixel direction and the interpolated depth value (in the same way that the coordinates of the datapoints are calculated from the unit vector of the emitted radiation and the total distance to the object).

Fig 21C illustrates a set of continuous line segments (indicated by the dotted lines) terminating at discontinuous points (indicated by black circles). The discontinuous points are projected onto image data which has had an edge detection algorithm applied to it, resulting in a detected edge indicated by the solid black line. It will be seen that the image data may provide more detail of the object than could be detected by the lidar device. The edges detected in the image data provide details about the object edge extending between the data points which are not detected by the lidar device. For example, the edge extending between points P1 and P2 consists of a complex line which would not be predicted by a simple interpolation between points P1 and P2.

Using the above method, a set of boundary points are generated that include the original points of discontinuity and the calculated xyz coordinates of the edges extending between the points of discontinuity from the image date, allowing a more refined object segmentation compared to object segmentations performed by the lidar or the camera alone. The results may be saved in the computer and may, for example, be rendered on a display or be provided as an input to a program.

A computing system such as the computer 900 may also be used to implement a method of integrating lidar data with image data from a stereo camera.

A computer-implemented method of integrating lidar data with stereo image data may be implemented as follows. It is noted that the lidar data may be obtained from the lidar devices disclosed herein which generate a gridded point distribution. Alternatively, the lidar data may be obtained from any other lidar device which generates a gridded point distribution, for example a scanning lidar device which is able to generate such a gridded point distribution.

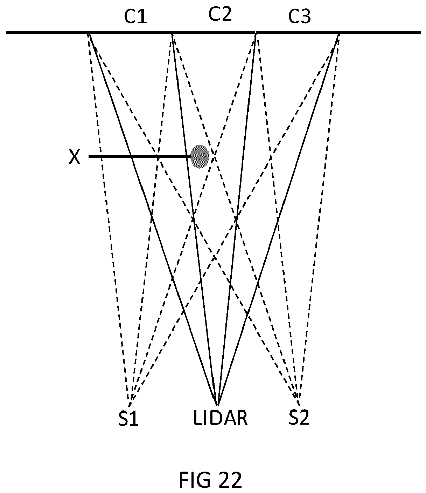

Fig. 22 illustrates a system comprising a lidar device and two imaging devices S1, S2 for implementing the method.

In the method, image data from a pair of imaging devices of a stereo camera (e.g. S1 and S2) is received. Lidar data from a lidar device is also received, the data comprising a plurality of datapoints each having physical co-ordinates, the datapoints having a gridded distribution in the field of view of the lidar device partitioning the field of view into a plurality of grid cells. The data may be obtained from any of the lidar devices disclosed herein. Alternatively, the data may be obtained from, for example, a scanning lidar device which has obtained a gridded point distribution of data. The position and orientation of the lidar device relative to each imaging device is received. The grid cells of the lidar data is mapped onto the pair of image data using the position and orientation of the lidar device relative to each imaging device and the coordinates of the lidar data. In other words, the grid cells of the lidar data are projected onto the image data using the relative positions and orientations of the imaging devices relative to the lidar device. For example, the lidar device data may comprise three closed cells C1, C2 and C3, which are then projected onto the image data of the imaging devices S1 and S2 as indicated by the dotted lines. A stereo algorithm is then performed on the pair of image data for one or more grid cells (e.g. a stereo algorithm is performed for one or more of cells C1, C2 and C3 in the image data). The initial disparity value of the stereo algorithm may be selected based on the depth values measured by the lidar at the cell border (for example an average of the cell border depth values or similar). Exemplary stereo algorithms include parametric-based algorithms (for example Sum of Absolute Difference (SAD), Normalized Cross Correlation (NCC) and Zeromean Sum of Absolute Differences (ZSAD)), or non-parametric-based algorithms (for example Rank Transform (RT) or Census Transform (CT)).

Advantageously, the lidar data provides a set of closed grid cells which can be projected onto each of the image data in the pair. This means that the pair of images can be partitioned into corresponding closed subsections, wherein a stereo algorithm can be performed locally in the subsection. Performing a stereo algorithm locally (in associated subsections) narrows the disparity range (the pixel difference between the same physical spot for the two images that directly relates to depth), which increases the accuracy and speed of the matching computation of the stereo algorithm. Accordingly, integration of the lidar data for the stereo algorithm greatly increases the stereo computational speed as compared to performing the same stereo algorithm without the lidar data. The stereo algorithm also calculates the physical coordinates of objects within a cell, which would not normally be detected by the lidar device. Accordingly, the method provides a denser distribution of datapoints which would not be achieved using the lidar device alone.

It may be that a given grid cell does not contain much useful image data. For example, some grid cells may contain a smooth surface with no texture, in which case the stereo algorithm will not provide useful results. Therefore, in some embodiments, the method may further comprise, for one or more grid cells, performing a statistical evaluation of the intensity values of the pixels in the grid cell for each pair of image data, and initializing a stereo algorithm for the grid cell when the statistical evaluation indicates that the statistical variation of intensity in the grid cell is greater than a predetermined threshold for each image in the pair. For example, the average intensity value for the pixels in the grid cell for each pair may be calculated, and the standard deviation or variance of the intensity. If the standard deviation or variance of the intensity is low for both images, then this indicates that there is little texture in the grid cell and that the stereo algorithm will not be useful. Accordingly, selectively initializing the stereo algorithm only for those grid cells which have a significant statistical variation (e.g. standard deviation or variance) further increases the computation speed of the method without sacrificing accuracy.

For the grid cells where the stereo algorithm is not performed, it may be assumed that the grid cell images a smooth surface and the coordinates of the grid cell border may be used to interpolate the surface across the area of the grid cell.

It may further be that the stereo algorithm does not converge for some grid cells. In particular, in some circumstances there may be an object in the foreground which lies in different grid cells for the imaging devices. As an example, Fig. 22 shows an object X which lies in cell C2 of the image taken by device SI, but lies in cell C1 of the image taken by device S2. Accordingly, the stereo algorithm for cell C2 does not converge. The method may then further comprise the step of, upon the stereo algorithm for a given grid cell not converging, iteratively including additional adjacent cells in the stereo algorithm until convergence is reached. For example, in the illustration of Fig. 22, the stereo algorithm may then be performed for the combined area of C1 and C2, which contains object X for both image data and therefore converges.

The resulting coordinates of the datapoints calculated from the lidar data and the stereo algorithm may be saved in a memory. They may also be displayed on a display of the computer.

The lidar devices disclosed herein can be calibrated using well-known methods in the art. The lidar devices may be pre-calibrated or the user may assemble the device (i.e. mounting the reflector to the rotary lidar source) and calibrate the device. For example, relative position of the reflector and the lidar device may be determined by imaging a reference object and comparing the calculated co-ordinates of the lidar device to the actual (known) co-ordinates of the reference object. In some embodiments, the reflector and rotary lidar device may be configured to be securable to one another in a fixed orientation, such that the device can be pre-calibrated before assembly by a user. Likewise, if the lidar device is used in combination with an imaging system such as a camera or stereovision system, the calibration of the lidar device and imaging system can be performed by acquiring images and lidar data of a reference object and projecting the lidar datapoints of said object on the acquired image, adjusting the projection parameters until the contours adjust adequately

The above apparatus may be provided as a kit of parts comprising a rotary lidar source as disclosed herein and a reflector as disclosed herein.

It is noted that in the methods disclosed herein, the order in which the steps are presented does not necessarily imply a chronological order and the method steps may be performed in any suitable chronological order.

All of the above are fully within the scope of the present disclosure, and are considered to form the basis for alternative embodiments in which one or more combinations of the above described features are applied, without limitation to the specific combinations disclosed above.

In light of this, there will be many alternatives which implement the teaching of the present disclosure. It is expected that one skilled in the art will be able to modify and adapt the above disclosure to suit its own circumstances and requirements within the scope of the present disclosure, while retaining some or all technical effects of the same, either disclosed or derivable from the above, in light of his common general knowledge in this art. All such equivalents, modifications or adaptations fall within the scope of the present disclosure.

## Claims

1. A lidar device, comprising:
a rotary lidar source comprising one or more laser emitters, the rotary lidar source configured to emit radiation from each laser emitter at a respective elevation angle and at a plurality of azimuthal angles about a first axis, the rotary lidar source further comprising one or more detectors configured to detect radiation reflected from the surroundings which is emitted from the one or more laser emitters; and
a reflector at least partially surrounding the rotary lidar source, the reflector configured to reflect radiation emitted from the rotary lidar source at a plurality of azimuthal angles for one or more elevation angles to generate a transformed field of view having point distribution with an increased point density in at least a part of the transformed field of view.

2. The lidar device according to claim 1, wherein the reflector comprises a plurality of planar reflective surfaces around the rotary lidar; optionally wherein the planar reflective surfaces are configured to generate an at least partially gridded point distribution in the transformed field of view.

3. The lidar device according to claim 1 or 2, wherein the reflector comprises: a plurality of surfaces forming a plurality of sides of at least one pyramid, a plurality of the surfaces comprising reflective surfaces configured to reflect radiation emitted by the one or more emitters, optionally wherein:
- the plurality of surfaces house the rotary lidar; and/or
- the at least one pyramid is truncated; and/or
- the first axis coincides with the axis of at least one of the pyramids; and/or
- the at least one pyramid is triangular, square, rectangular, pentagonal, hexagonal, regular polygonal or irregular polygonal.

4. The lidar device according to claim 3, wherein the plurality of surfaces form a plurality of sides of two back-to-back truncated pyramids facing in different directions, and/or the plurality of sides form the sides of a one or more further truncated pyramids stacked on a first pyramid.

5. The lidar device of any preceding claim, wherein the reflector comprises at least one curved reflective surface, optionally wherein the reflector comprises at least one concave reflective surface and/or one convex reflective surface.

6. The lidar device of any of claims 2 to 5, wherein the tilt angles of one or more of the reflective surfaces relative to the first axis is adjustable, optionally wherein the device comprises one or more actuators for adjusting the tilt angles of one or more reflective surfaces.

7. The lidar device of any preceding claim, wherein the lidar device or reflector is further rotatable about a second axis; optionally wherein the second axis is offset from the first axis, preferably wherein the lidar device is rotatable about a second axis which is either coincident with or perpendicular to the first axis; or
wherein the reflector at least partially surrounding the rotary lidar source is a first reflector, the device further comprising a second reflector configured to reflect radiation emitted by the first reflector, and wherein the second reflector is rotatable to adjust the field of view of the lidar device; optionally wherein the second reflector is a planar surface

8. A computer-implemented method of computing co-ordinates of datapoints from a lidar device, the lidar device comprising a rotary lidar source configured to emit radiation at one or more elevation angles, the rotary lidar source configured to emit radiation at a plurality of azimuthal angles at each elevation angle, and a reflector at least partially surrounding the rotary lidar source for generating a transformed field of view, the method comprising:
receiving a plurality of datapoints from the rotary lidar source, each datapoint comprising at least an azimuthal angle and elevation angle of the radiation, and an indication of the total distance travelled by the radiation to an object;
for each received datapoint:
calculating a unit vector of the radiation emitted from the lidar device at the azimuthal angle and elevation angle;
calculating the coordinates of the datapoint from the unit vector and the indication of the total distance travelled by the radiation.

9. The method of claim 8, wherein calculating the coordinates of the datapoint from the unit vector and the total distance travelled by the radiation comprises the steps of: calculating a first distance travelled by emitted radiation from the laser emitter to an impact point on the surface of the reflector for the azimuthal angle and elevation angle of the datapoint;
calculating a second distance by subtracting the first distance from the total distance; and
calculating the physical co-ordinates of the datapoint from the unit vector, the impact point, and the second distance.

10. The method of claim 8 or 9, wherein the reflector is configured to generate an at least partially gridded point distribution in the transformed field of view, the method further comprising performing an object segmentation analysis comprising the steps of:
a) determining one or more points of discontinuity along a first line in the gridded point distribution, the points of discontinuity defining a first continuous line segment of an object;
b) selecting all the secondary lines in the gridded point distribution which cross the first continuous line segment; and
c) determining one or more points of discontinuity along the secondary lines to define a second set of continuous line segments of the object;
optionally wherein steps b) and c) of the object segmentation analysis are performed iteratively for each line which crosses a continuous line segment to form a set of continuous line segments belonging to a common object with a continuous surface.

11. The method of claim 10, further comprising receiving calibrated image data of the object, performing an edge detection analysis on the image data, and calculating a boundary of the object from the points of discontinuity and from one or more boundaries detected in the edge detection analysis of the image data.

12. A computer-implemented method, comprising:
receiving a pair of image data from a pair of imaging devices of a stereo camera;
receiving lidar data from a lidar device, the data comprising a plurality of datapoints each having physical co-ordinates, the datapoints having a gridded distribution in the field of view of the lidar device partitioning the field of view into a plurality of grid cells;
receiving the position and orientation of the lidar device relative to each imaging device;
mapping the grid cells of the lidar data onto the pair of image data from the position and orientation of the lidar device relative to each imaging device; and
performing a stereo algorithm on the pair of image data for one or more grid cells;
optionally wherein if the stereo algorithm does not converge, iteratively including additional adjacent cells in the stereo algorithm until convergence is reached.

13. The method of claim 12, wherein the method comprises, for one or more grid cells:
performing a statistical evaluation of the intensity values of the pixels in the grid cell for each pair of image data; and
initializing a stereo algorithm for the grid cell when the statistical evaluation indicates that the statistical variation of intensity in the grid cell is greater than a predetermined threshold for each image in the pair.

14. A computer program product comprising instructions which, when executed by a computer, cause the computer to carry out the method of any of claims 8 to 13.

15. A kit of parts, comprising:
a rotary lidar source comprising a plurality of laser emitters, each laser emitter configured to emit radiation from the rotary lidar source at a respective elevation angle, the plurality of laser emitters configured to emit radiation from the rotary lidar source at a plurality of azimuthal angles about a first axis and at the respective elevation angle, the rotary lidar source further comprising one or more detectors configured to detect radiation reflected from the surroundings which is emitted from the laser emitters; and
a reflector configured to at least partially surround the rotary lidar source, the reflector configured to reflect radiation emitted from the rotary lidar device at a plurality of azimuthal angles for a plurality of elevation angles to generate a transformed field of view having point distribution with an increased point density in at least a part of the transformed field of view.
